# EUROPEAN PATENT SPECIFICATION

(11) **EP 3 076 308 B1**
(45) Date of publication and mention of the grant of the patent: **29.11.2017**
(21) Application number: 15161981.4
(22) Date of filing: 31.03.2015
(51) Int. Cl.: G06F 17/30

(54) **TELECOMMUNICATION METHOD FOR HANDLING A DATABASE QUERY IN A TELECOMMUNICATION SYSTEM**
TELEKOMMUNIKATIONSVERFAHREN ZUR HANDHABUNG EINER DATENBANKABFRAGE IN EINEM TELEKOMMUNIKATIONSSYSTEM
PROCÉDÉ DE TÉLÉCOMMUNICATION PERMETTANT DE MANIPULER UNE REQUÊTE DE BASE DE DONNÉES DANS UN SYSTÈME DE TÉLÉCOMMUNICATION

(43) Date of publication of application: 05.10.2016
(73) Proprietor: SAP SE, 69190 Walldorf (DE)
(72) Inventor: Kemmler, Andreas, 69190 Walldorf (DE); Kamenz, Torsten, 69190 Walldorf (DE)
(74) Representative: Richardt Patentanwälte PartG mbB

(56) References cited:
- US-A1- 2010 257 137
- Cypherfox: "In-memory database", , 4 February 2015 (2015-02-04), XP055196273, Retrieved from the Internet: URL:https://en.wikipedia.org/w/index.php?t itle=In-memory_database&oldid=645610664 [retrieved on 2015-06-16]

## Description

### Field of the invention

The invention relates to a telecommunication method for handling a database query in a telecommunication system.

### Background and related art

Currently, UMTS (universal mobile telecommunications systems) networks are worldwide being upgraded in order to provide data to user equipments (nodes or telecommunication devices) at high data rates. In order to ensure the competitiveness of UMTS for the next couple of years and beyond, concepts for UMTS long-term evolution (LTE) have been investigated. Objective is a high data rate, low latency and packet optimized radio access technology.

A UMTS network constitutes the third generation (3G) of cellular wireless networks. Thereby, multimedia broadcast/multicast service (MBMS) is one of the evolving service concepts within the third generation networks. MBMS is a user service, which is a combination of both a broadcast service and a multicast service. Third generation partnership (3GPP) is working on establishing standards for multimedia/multicast services.

However, in modern data processing applications for mobile telecommunication devices the amount of data processed for example per database query is thus ever increasing. This may lead to a massive processing load which in the worst case cannot be handled by the processing unit of a single mobile telecommunication device. An approach to overcome this deficiency of mobile telecommunication devices is to divide the workload between pluralities of telecommunication devices. In order to be able to redirect database queries to individual telecommunication devices it is necessary to provide basically the same data on the plurality of telecommunication devices. Thus the content of the database of one master mobile device has to be copied to the databases of a plurality of slave mobile devices in order to balance the workload between the plurality of mobile telecommunication devices.

In course of the execution of a plurality of database queries in such a distributed telecommunication system, the contents of both the original (master) database and the replicate (slave) databases have to be synchronized as the contents for the databases may change over time. As this synchronization can almost never happen in real time, data inconsistencies between the master database and the slave database may occur. As a result not every database query may be redirected to the slave database node for processing. Further the synchronization of the data comprised in the plurality of mobile telecommunication devices may cause massive network traffic over wireless telecommunications networks and may further afflict the lifetime of the batteries comprised in the mobile telecommunication devices.

US 2010/0257137 A1 discloses an access to subscriber data in a telecommunication system, and provides for a database system with a master database and with a plurality of slave databases acting as memory caches closely located with the requester applications and for a method of handling such database system. The method includes the steps of: configuring data clusters at the master database, each data cluster identifying subscriber data associated with an operation and assigned a priority; determining at the master database the priority of the data cluster associated with a received operation; and either providing the data cluster associated with the operation from the master database towards the slave database, replicating the received data cluster at the slave database, and executing the operation with the received data cluster at the slave database, where the priority of the data cluster is higher than for previous operations; or executing the operation with the data cluster at the master database, where the priority of the data cluster is lower than for a previous operation.

https://en.wikipedia.org/w/index.php?title=In-memory database&oldid=645610664 discloses that an in-memory database is a database management system that primarily relies on main memory for computer data storage.

### Summary

It is an objective of the present invention to provide for an improved telecommunication method for handling a database query in a telecommunication system as well as a corresponding telecommunication system and computer program product as specified in the independent claims.

Embodiments of the invention are given in the dependent claims.

Embodiments of the present invention can be freely combined with each other if they are not mutually exclusive.

In one aspect the invention relates to a telecommunication method for handling a database query in a telecommunication system. The telecommunication system comprises a master node and at least one slave node. The master node and the slave node may both be battery powered mobile telecommunication devices which are operable to communicate via a wireless telecommunications network. The master node comprises a first central processing unit and a first main memory wherein the first main memory comprises data elements. The slave node comprises a second central processing unit and a second main memory. The second main memory comprised in the slave node comprises a replicate version of a first set of the data elements comprised in the master node. The method for handling the database query then comprises the reception of the database query at the telecommunication system via a telecommunications network wherein the database query requires access to a second set of the data elements. Once the database query has been received it is then determined whether the database query may be executed using replicate versions of data elements. In case the database query may be executed using replicate versions of the data elements the database query is then executed on the slave node in-memory using the second central data processing unit and second main memory. In case the database query may not be executed using replicate versions of the data elements the execution of the database query is then performed on the master node in-memory using the first central data processing unit and the first main memory.

As described here a replicate version of a data element is a copy of a data element which may soon be outdated as the data elements in the master node are continuously being accessed and especially altered. Thus the data elements comprised in the main memory of the slave node are copies of former versions of the data elements comprised in the master node. In the context of the present invention a data element has to be understood as a digital machine readable element comprising information which may for example be arranged in the form of a table or a plurality of tables.

It has to be noted that herein a database query has to be understood as an abstract query for data comprised in a database which may also include an analysis of the comprised data. Thus the execution of a single database query for example by a processing engine may lead to a plurality of SELECT statements which subsequently have to be processed by the database.

Embodiments may have the advantage that the processing load caused by executing a database query on the central processing unit of a node can be divided between the slave node and the master node. This dividing of processing load may for example be possible for database queries which require access to data elements whose up-to-dateness is not important for processing the database query. For example database queries referring to an analysis of the contents of the data elements may in some cases be executed on outdated data elements thereby giving the same result which would have been received if the database query was executed on the master node with the up to date data elements. A database query referring to an analysis of data may for example be directed towards determining the revenue of a company for a certain quarter in a certain region. As this data may have been collected a long time ago and will not or not likely be changed afterwards it is not necessary to execute the database query on the master node with the most actual data. It is however necessary for each database query to determine whether the database query may be executed using outdated data elements or whether the database query has to be executed on up to date data elements.

In some embodiments the telecommunication system further comprises an application server wherein the application server comprises a plurality of engines for processing database queries. Each engine is adapted to process a predefined type of database query. For example there may be engines for processing analytic type database queries or other engines for processing search type database queries. The application server is further operatively coupled via the telecommunication network with the master node and the slave node. In this embodiment the method comprises determining a set of engines from the plurality of engines which are adapted to process database queries that may be executed using replicate versions of data elements. The determination whether the database query may be executed using replicate versions of data elements upon the reception of the database query at the telecommunication system is then conducted by determining a first engine from the plurality of engines which is adapted to process the database query. In case this first engine is comprised in the set of engines which has been determined before, the database query is then processed by this first engine by the execution of the database query on the slave node. In case the first engine is not comprised in the set of engines the database query is then processed by the first engine by the execution of the database query on the master node.

Embodiments may have the advantage that the decision whether a database query may be executed on the slave node is simplified as the decision usually is based on determining the type of database access the database query requires. If for example a first engine comprised in the application server is adapted to only process analytic database queries it is possible to directly route all the database queries processed with this engine to the slave node.

In some embodiments the first engine is further adapted to determine the second set of data elements which has to be accessed in order to execute the database query. Once the second set of data elements has been determined it is further determined whether the second set of data elements is comprised in the first set of data elements which is stored in the main memory of the slave node. In case the second set of data elements is comprised in the first set of data elements the first engine is adapted to process the database query by the execution of the database query on the slave node. However, in case the second set of data elements is not comprised in the first set of data elements the first engine is adapted to process the database query by the execution of the database query on the master node.

Embodiments may have the advantage that prior to the execution of the database query it is determined whether all necessary data elements are in fact comprised in the slave node. It has to be noted that a database query requiring access to a plurality of data elements cannot be properly executed if some of the data elements are stored as replicate versions in the slave node and some are stored only as original versions in the master node. The overall data content of such a constellation may lead to erroneous results of the execution of the database query as the starting conditions are not the same for all individual database accesses conducted during execution of the database query.

In some embodiments the method further comprises creating a log file upon said determination that the second set of data elements is not comprised in the first set of data elements. The log file then comprises information indicative of a third set of data elements wherein the third set of data elements comprises the data elements of the second set of data elements which are not comprised in the first set of data elements.

Embodiments may have the advantage that a database administrator can easily see which data elements have to be provided as replicate versions in a slave node to fully use the potential of the database system by redirecting database queries to the slave node. If for example a database query in principle may be executed on the slave node using replicate versions of data elements, however cannot be executed on the slave node because not all necessary data elements are provided as replicate versions in the slave node, the database query cannot be executed on the slave node. However creating a log file allowing for a subsequent adaption of the contents of the slave node such that all subsequent database queries which may be executed on the slave node actually can be executed on the slave node as all necessary data elements are provided as replicate versions may enable a balancing of the processing load between master and slave node.

In some embodiments the telecommunication system further comprises a database management entity wherein the database management entity is adapted to access the information comprised in the log file and create and store a replicate version of the third set of data elements in the main memory of the slave node.

Embodiments may have the advantage that the previously described optimization of the database system by providing all necessary data elements in the slave node for execution of the database queries on the slave node can be conducted automatically. Thus it is not necessary to wait until a database administrator triggers the replication of the data elements instead the telecommunication system will update its slave node by itself.

In some embodiments the execution of the database query employs a plurality of database views, wherein the database views comprise annotations. The annotation is indicative whether the database view can be executed using replicate versions of data elements. Determining whether the database query may be executed using replicate versions of data elements is then conducted by reading the annotations comprised in the views which are employed by the database query.

In some embodiments the telecommunication system further comprises a mobile telecommunication device and a database server wherein the mobile telecommunication device and the database server are connected via the telecommunication network. The mobile telecommunication device comprises the slave node, a first telecommunication interface and a third central processing unit. The database server comprises the master node. In this embodiment the method comprises the reception of the database query via the first telecommunication interface at the mobile telecommunication device. The determination whether the database query may be executed using replicate versions of data elements is then conducted by the third central processing unit. In case the database query may be executed using replicate versions of the data elements the method comprises the execution of the database query on the slave node in-memory using the second central data processing unit and second main memory. In case the database query may not be executed using replicate versions of data elements the method further comprises the execution of the database query by forwarding the database query to the database server via the first telecommunication interface and in response to forwarding the database query to the database server, receiving a result of the database query from the database server via the first telecommunication interface.

Embodiments may have the advantage that at least some of the database queries received at the mobile telecommunication device can be executed locally on the slave node comprised in the mobile telecommunication device. Thus it is not necessary to address the database server for processing the database query via the telecommunication network which may allow for saving battery power on the mobile telecommunication device.

In some embodiments the master node further comprises access statistics for the data elements stored in the main memory of the master node wherein the access statistics comprise information for the data elements indicative of a rate of change for the data elements. The method then comprises determining the rate of change of a data element, determining whether the rate of change of the data element is below a predefined threshold and in case the rate of change of the data element is below the predefined threshold creating a replicate version of the data element and storing the replicate version of the data element in the main memory of the slave node.

For example the predefined threshold may be chosen such that only such data elements are stored in the slave node, which are changed only at a very low rate thereby not having to be updated very often. As a result the update traffic between the master node and the slave node can be reduced by creating replicate versions only of those data elements which are changed only rarely.

In another aspect the invention relates to a telecommunication system comprising a master node and at least one slave node. The master node comprises a first central processing unit and a first main memory the first main memory comprising data elements. The slave node comprises a second central processing unit and a second main memory. The second main memory comprises a replicate version of a first set of data elements comprised in the first main memory of the master node. The telecommunication system is adapted to
- receive the database query via a telecommunication network, the database query requiring accessing a second set of the data elements,
- determine whether the database query may be executed using replicate versions of the data elements,
- in case the database query may be executed using replicate versions of data elements, execute the database query on the slave node in-memory using the second central data processing unit and second main memory,
- in case the database query may not be executed using replicate versions of data elements execute the database query on the master node in-memory using the first central data processing unit and first main memory.

In yet another aspect the invention relates to a computer program product which when executed on the telecommunication system, as described before, causes the telecommunication system to execute the method as described above.

### Brief description of the drawings

In the following embodiments of the invention are explained in greater detail by way of example only, making reference to the drawings in which:
- Fig. 1: is a block diagram of a telecommunication system,
- Fig. 2: is a block diagram of another telecommunication system, and
- Fig. 3: is a flow diagram of the method for processing database queries.

### Detailed description

In the following similar elements are denoted by the same reference numerals.

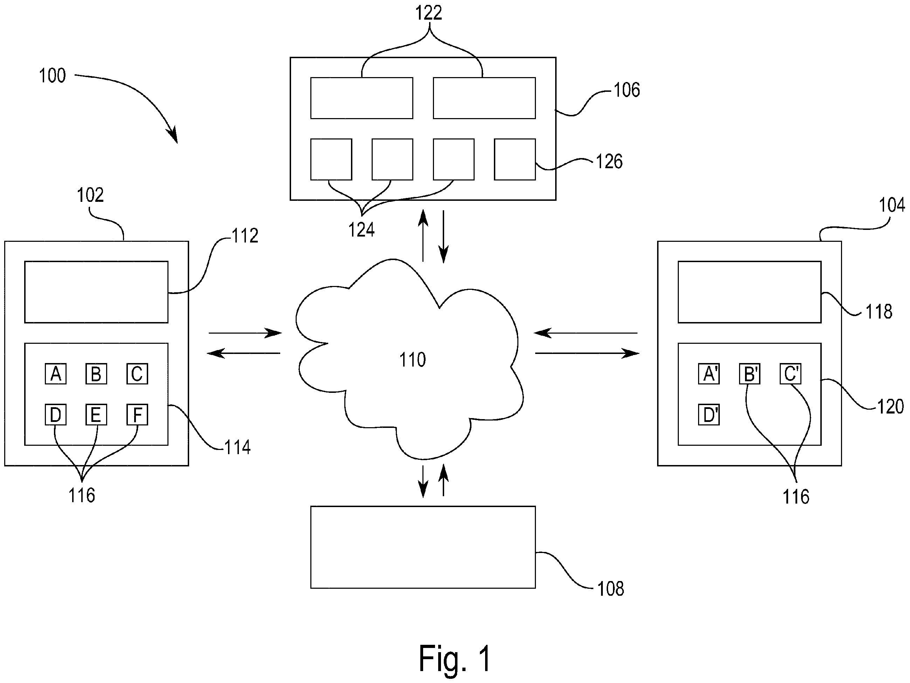

Fig. 1 is a block diagram of a telecommunication system 100 like for example a mobile cellular network. The telecommunication system 100 comprises a master mobile telecommunication device, henceforth called "master telecommunication node" 102, a slave mobile telecommunication device, henceforth called "slave telecommunication node" 104 as well as an application server 106 and a management entity 108. The master node 102, the slave telecommunication node 104, the application server 106 and the database management entity 108 are coupled via a telecommunication network 110. In the present example the master telecommunication node 102 and the slave telecommunication node 104 are both battery powered mobile telecommunication devices like smartphone, PDAs, tablet computers, or other electronic devices capable of processing data and communicating data via a telecommunication network. However other telecommunication devices are also possible.

The master telecommunication node comprises a first central processing unit 112 and a first main memory 114 comprising data elements 116. The data elements 116 are denoted with A, B, C, D, E and F. The slave telecommunication node 104 is similar to the master telecommunication node 102. As such the slave telecommunication node 104 comprises a second central processing unit 118 and a second main memory 120. The second memory 120 comprises data elements 116 as well wherein the data elements 116 comprised in the second main memory 120 are replicate versions of the data elements 116 comprised in the main memory 114 of the master telecommunication node 102. The fact that the data elements 116 comprised in the main memory 120 of the slave telecommunication node 104 is indicated by the letters A', B', C' and D'. Note that the data elements E and F comprised in the main memory 114 of the master telecommunication node 102 are not comprised in the main memory 120 of the slave telecommunication node 104.

The databases comprised within the master telecommunication node 102 and the slave telecommunication node 104 may both employ in-memory database techniques.

The application server 106 comprises a plurality of engines 122 which are adapted to process predefined types of database queries. Further the application server 106 comprises a plurality of database views 124 and a log file 126. Introducing an application server 106 comprising a plurality of engines 122 for processing database queries may have the advantage that the mobile telecommunication devices 102, 104 comprised in the telecommunication system 100 do not have to provide data processing applications themselves. For example the database query received at the telecommunication system 100 may have to be translated or divided into a plurality of individual database accesses prior to the retrieval and/or processing of the data demanded by the database query. This may cause massive processing load on the mobile telecommunication device receiving and processing the database request. In contrast thereto the application server 106 may for example be a stationary computer system, which is operable to translate the database query into smaller and easier to process subqueries or even SELECT statements which are directly executable on the databases comprised in the mobile telecommunication devices. Thus the demands on the central processing units of the mobile telecommunication devices of the telecommunication system 100 as well as the energy consumption and thus battery lifetime for the mobile telecommunication devices may be reduced.

As described before the master telecommunication node 102, the slave telecommunication node 104, the application server 106 and the database management entity 108 are connected via a telecommunication network 110. The telecommunication network 110 may for example be a digital cellular telecommunication network.

In the following it will be described how the telecommunication system 100 depicted in Fig. 1 handles an incoming database query. For example the database query may be received at the telecommunication system 100 for example at the master telecommunication node 102. The database query may then be forwarded to the application server 106 via the telecommunications network 110 and may then be evaluated by the application server 106. A database query may for example be a transaction-based (OLTP) or an analytics-based (OLAP) process, wherein for example one of the engines 122 is operable to process only OLAP processes. Usually one of the engines 122 would execute the database query for example by calling one or more of the database views 122 which are comprised in the application server 106 when formulating a SELECT statement for processing by the central processing unit of the master telecommunication node 102 or the slave telecommunication node 104. The database views 124 can basically be understood as a predefined database query comprising a number of database commands like SELECT statements. The database views 124 which are called by the engine 122 processing the database query are then translated into SQL statements and processed by the central processing unit of for example the master telecommunication node 102.

As the depicted in Fig. 1 the master telecommunication node 102 and the slave telecommunication node 104 are mobile telecommunication devices within a telecommunication system 100. Usually the processing units of mobile telecommunication devices cannot provide a performance comparable to the performance of a stationary computing device. As a result the capabilities of the first central processing unit 112 comprised in the master telecommunication node 102 may cause a bottleneck when processing database queries only on a single mobile telecommunication device, in this case the master telecommunication node 102 The performance of the telecommunication system 100 as a whole might however be increased by copying at least a subset of the data elements 116 stored in the first main memory 114 of the master telecommunication node 102 to the main memory 120 of a slave telecommunication node 104. It may then be possible to execute at least some database queries on the slave telecommunication node thereby achieving a load balancing between the master telecommunication node 102 and the slave telecommunication node 104. However, some database queries do not only retrieve data from the data elements 116 comprised in the main memory 114 of the master telecommunication node 102 but also change the data comprised. In order to achieve the same results of a database query for both the master telecommunication node 102 and the slave telecommunication node 104 it is necessary to synchronize the data elements 116 comprised in the main memories of both the master telecommunication node 102 and the slave telecommunication node 104.

However, this synchronization can usually not be accomplished in real time. Further a high frequency of synchronization processes will cause a massive data traffic in the telecommunications network and will consume large amounts of energy which may lead to reduced lifetimes of the batteries comprised in the mobile telecommunication devices 102, 104 of the telecommunications system 100. As a result the data elements 116 comprised in the main memory 120 of the slave telecommunication node 104 will mostly be outdated versions of the data elements 116 comprised in the master telecommunication node 102. As not all database queries may be executed on outdated data elements 116 it has to be determined whether the database query received at the telecommunication system may be executed on the slave telecommunication node 104 or has to be executed on the master telecommunication node 102. For example it may be necessary to execute a database query on the master telecommunication node 102 because a database query is time critical or because business decisions have to be made based on the result of the database query.

As described before the database queries may be of an OLAP or OLTP type. Usually analysis processes work on highly aggregated transactional data and thus it is not of utmost importance that all records contributing to the analysis are covered. Further it is usually not necessary that all data processed by the analysis is up to date. For example the data processed during an analysis may contain a plurality of numerical values as transactional data which are linked for example with a certain process with a defined name as master data. A change of the master data, the name of the process, will not influence the general result of an analysis of the data. Thus this change in the data may be neglected and replicate versions of the data comprising an older version of the master data may be used for the analysis. Further an analysis process may refer to data collected a long time ago. As this data will most likely not be changed any more the execution of the analysis using a replicate version of this data will most likely yield the same result as an analysis executed on the most actual version of the data.

Thus analysis processes are a candidate for working on an asynchronous replicate of the data elements 116. Usually each of the engines 122 is only designed to process a certain type of database query. As such there may for example be an analytic engine which is only operable to process OLAP type database queries. As these database queries may be executed on replicate tables it may be possible to design the analytic engine 122 such that all database queries processed by this engine 122 are directly executed on the slave telecommunication node 104 or are routed to the slave telecommunication node 104 by the first central processing unit 112 of the master telecommunication node 102.

One way to forward database queries executed by the analytic engine 122 to the slave telecommunication node 104 may be to design the analytic engine 122 such that the SELECT statements created by the analytic engine 122 comprise a hint that the SELECT statement can be executed on the slave telecommunication node 104 using asynchronous replicates of the data elements 116. Once such a SELECT statement comprising a hint is received by the first central processing unit 112 of the master telecommunication node 102, the central processing unit 112 may redirect the received SELECT statement to the slave telecommunication node 104 for processing by the second central processing unit 118. However the first central processing unit 112 is not constrained to forward every SELECT statement comprising a hint for processing with replicates to the slave telecommunication node 104. Rather the first central processing unit 112 may decide whether or not to forward the SELECT statement to the slave telecommunication node 104 for example based on the current workload of the master telecommunication node 102.

Another possibility to re-route the database queries processed by an engine 122 to the slave telecommunication node 104 without having to design the engine 122 to automatically include hints in SELECT statements may lie in the database views 124. For example the database views 124 may comprise annotations indicative of what a certain view 124 is intended to do or more precisely in which scenario type (analytics, search, transactional...) a view is used. As a result the engines 122 for processing database queries may be designed to initially read the annotations of the views 124 they intend to use to execute the database query. Based on the contents of these annotations the engines 122 may then decide whether the database query can be re-routed to the slave telecommunication node thereby relieving the first central processing unit 112 of the master telecommunication node 102 or whether the database query has to be executed on the master telecommunication node 102. Thus the engine 122 processing the database query may decide to include a hint in the SELECT statement created for processing the database query as described above based on the annotation of the views 124 which are used in the corresponding SELECT statement.

In both approaches for rerouting database queries to the slave telecommunication node 104 described above the first central processing unit 112 of the master telecommunication node 102 has to decide whether an incoming database query or SELECT statement can be rerouted to the slave telecommunication node 104 for processing. It may however also be possible to design the engines 122 such that they directly forward a SELECT statement for processing a database query either to the master telecommunication node 102 or to the slave telecommunication node 104. In analogy to the first approach concerning processing database queries by an analytic engine 122 it may also be possible to design the analytic engine 122 such that the SELECT statements for all database queries processed by the analytic engine 122 are directly forwarded to the slave telecommunication node without including a hint.

It may further be possible to design the engines 122 such that when using database views 124 for processing a database query, the engines 122 first read the annotations of the database views 124 and based on these annotations decide whether to directly forward the SELECT corresponding statement to the slave telecommunication node 104 or to the master telecommunication node 102.

The rerouting or forwarding of database queries either to the master telecommunication node 102 or the slave telecommunication node 104 for processing as described above may have the advantage that the rate of synchronization for the contents of the first main memory 114 and the second main memory 120 can be kept at a low level while a load balancing between the plurality of mobile devices can still be accomplished. Thus the traffic within the telecommunication network 110 as well as the power consumption of the individual nodes can be kept very low while the performance of the overall telecommunication system 100 remains at a high level. This is important especially for battery powered mobile devices like smartphones, tablet computers or PDAs.

As described before the second main memory 120 of the slave telecommunication node 104 may comprise only a subset of the data elements 116 comprised in the main memory 114 of the master telecommunication node 102. As a result the situation might occur that a database query is determined to be executable on the slave telecommunication node 104, however, the database query cannot be executed on the slave telecommunication node 104 because the necessary data elements 116 are not comprised in the main memory 120 of the slave telecommunication node 104. Thus it may be necessary to design the engines 122 such that prior to routing a database query to one of the nodes the engine 122 first determines whether the necessary data elements 116 are in fact comprised in the main memory of the corresponding node. This checking whether the corresponding data elements 116 are provided in the main memory which shall be addressed may also be implemented in the database views 124.

As a database query may only be executed fully on replicate data elements or on original data elements the engines 122 may further be designed such that if they determine that a database query could have been executed on the slave telecommunication node, however cannot because the corresponding data elements 116 are missing in the main memory 120 of the slave telecommunication node 104, the engines 122 create or access a log file 126 and create an entry in the log file 126 indicating that some of the data elements 116 of the master telecommunication node 102 have to be replicated and stored in the main memory 120 of the slave telecommunication node 104. This log file 126 may then be accessed on a regular basis for example by a database administrator or in an automated fashion by a database management entity 108. Upon determining that a number of data elements 116 have to be replicated and stored in the main memory 120 of the slave telecommunication node 104 the database management entity 108 may trigger the replication of the corresponding data elements 116. As a result a subsequent database query may then be executed on the slave telecommunication node 104 as the necessary data elements 116 will already be present in the main memory 120.

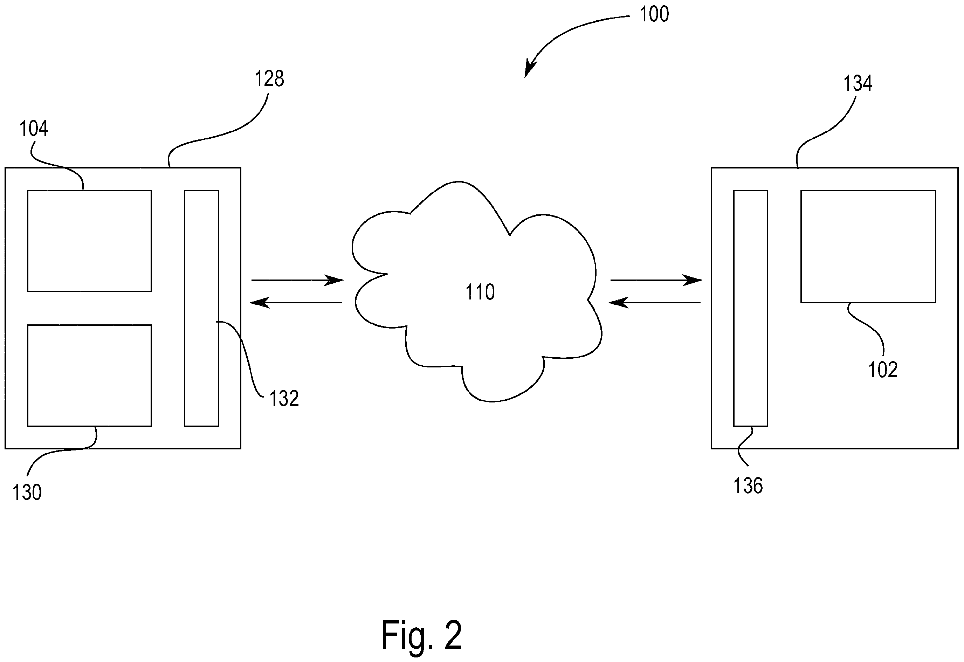

Fig. 2 is a block diagram of another telecommunication system 100. In the telecommunication system 100 depicted in Fig. 2 the slave telecommunication node 104 is comprised in a mobile device 128. The mobile device 128 further comprises a third central processing unit 130 as well as a telecommunication interface 132. The master telecommunication node 102 is comprised in a database server 134. The database server 134 further comprises a second telecommunication interface 136. The mobile telecommunication device 128 and the database server 134 are connected via the telecommunication network 110.

A database query may be received or created by the mobile telecommunication device 128. It may then be determined whether the database query can be executed on the slave telecommunication node 104 comprised in the mobile device 128. This determination may be conducted by the third central processing unit 130 of the mobile telecommunication device 128. In case the database query can be executed on the slave telecommunication node 104 the database query can be executed locally on the mobile device 128 without having to address a remote server via the network 110. Thus executing the database query locally may allow for savings of battery power of the mobile telecommunication device 128.

However, if it is determined that the database query cannot be executed on the slave telecommunication node 104 the mobile device 128 may forward the database query via the first telecommunication interface 132 over network 110 to the database server 134. The database server 134 may then execute the database query on the master telecommunication node 102 and return the results of the database query via the second telecommunication interface 136 over the network 110 to the mobile device 128.

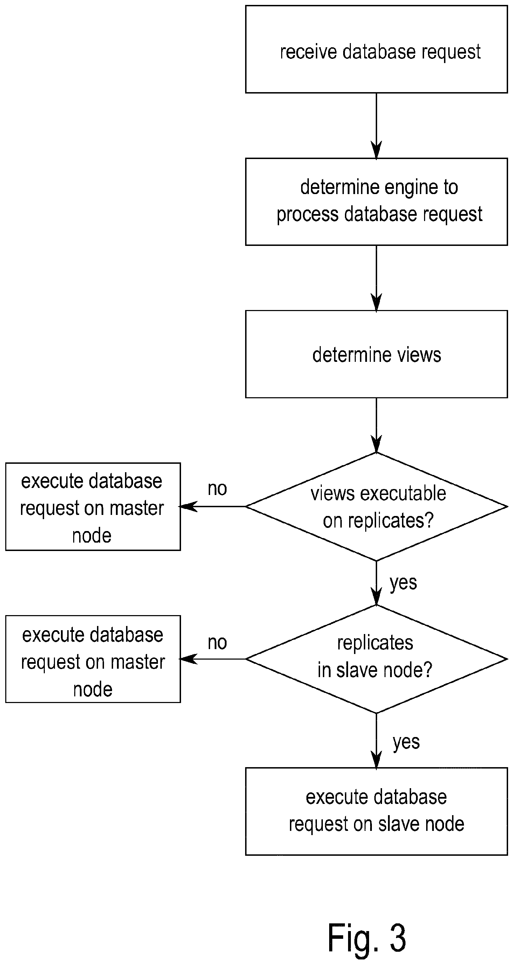

Fig. 3 is a flow diagram of a telecommunication method for handling a database query. In a first method step the database query is received at a telecommunication system 100 as described for example with reference to Fig. 1. In a second step it is then determined which engine 122 comprised in the application server 106 of the telecommunication system 100 is operable to process the received database query. The engine 122 which is to process the database query then determines the corresponding database views 124 which have to be addressed in order to execute the database query. As described before these database views 124 may comprise information whether they can be executed on a replicate table. Thus in a subsequent step it has to be decided whether the database view 124 can use replicate versions of data elements 116. If it is determined that the database view 124 cannot be executed using replicate versions of data elements 116 the engine 122 executes the database query on the master telecommunication node 102. If it is however determined that the database views 124 can be processed using replicate versions of data elements 116 it is subsequently determined whether the data elements 116 necessary for processing the database requests are in fact comprised in the main memory 120 of the slave telecommunication node 104. If it is determined that the necessary data elements 116 are not comprised in the main memory 120 of the slave telecommunication node 104 the database query is executed by the engine 122 using the master telecommunication node 102. Only if it is determined that all necessary data elements 116 for executing the database query are in fact comprised in the main memory 120 of the slave telecommunication node 104 the database query is executed on the slave telecommunication node 104.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. A 'telecommunication device' may be any of a device capable of processing and/or communication information via a telecommunications network, like mobile phones, smartphones, PDAs, tablet computers, laptops, computers, database systems, personal computers, smart watches, smart TVs and/or pagers. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'database' as used herein encompasses a data file or repository which contains data that may be accessed by a processor. Examples of databases are, but are not limited to: a data file, a relational database, a file system folder containing data files, and a spreadsheet file.

A 'processor' or `processing unit' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term device or computing device should also be interpreted to possibly refer to a portable or stationary computing device or collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Small-talk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). A 'telecommunications network' as used herein may be any of a cellular network like GSM, UMTS, LTE, WiMax, wide area networks (WAN), metropolitan area networks (MAN), local area networks (LAN), Internet area networks (IAN), campus area networks (CAN), or virtual private networks (VPN). Further the telecommunications network may be wireless and/or wire-based. A telecommunications network may also be the direct connection via cable or between two data processing entities or telecommunication devices.

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

### List of reference numerals

- 100: Telecommunication System
- 102: Master Node
- 104: Slave Node
- 106: Application Server
- 108: Database Management Entity
- 110: Telecommunications Network
- 112: First Central Processing Unit
- 114: First Main Memory
- 116: Data Element
- 118: Second Central Processing Unit
- 120: Second Main Memory
- 122: Engine
- 124: Database View
- 126: Log File
- 128: Mobile Telecommunication Device
- 130: Third Central Processing Unit
- 132: First Telecommunication Interface
- 134: Database Server
- 136: Second Telecommunication Interface

## Claims

1. Telecommunication method for handling a database query in a telecommunication system (100), the telecommunication system (100) comprising a master node (102), at least one slave node (104) and an application server (106), wherein the master node (102) comprises a first central processing unit (112) and a first main memory (114), the first main memory (114) comprising data elements (116), wherein the slave node (104) comprises a second central processing unit (118) and a second main memory (120), the second main memory (120) comprising a replicate version of a first set of the data elements (116), wherein the application server (106) comprises a plurality of engines (122) for processing database queries, wherein each engine (122) is adapted to process a predefined type of database query, wherein the application server (106) is operatively coupled via the telecommunication network (110) with the master node (102) and the at least one slave node (104), the application server (106) comprises a plurality of database views (124), wherein the database views (124) comprise annotations indicating the scenario type of a view, the method comprising:
- receiving the database query at the telecommunication system (100) via a telecommunication network (100), the database query requiring accessing a second set of the data elements (116),
- determining by a first engine of the plurality of engines a type of the database query by reading the annotations comprised in the database views (124) employed by the database query,
- in case the type of the database query can be executed by the slave node re-routing the database query to the slave node to be executed on the slave node (104) in-memory using the second central data processing unit (118) and second main memory (120),
- otherwise processing the database query by the first engine (122) by executing the database query on the master node (102) in-memory using the first central data processing unit (112) and first main memory (114).

2. The telecommunication method of claim 1, wherein the first engine (122) is adapted to:
- determine the second set of data elements (116) which has to be accessed in order to execute the database query,
- determine whether the second set of data elements (116) is comprised in the first set of data elements (116),
- in case the second set of data elements (116) is comprised in the first set of data elements (116), process the database query by the execution of the database query on the slave node (104),
- in case the second set of data elements (116) is not comprised in the first set of data elements (116), process the database query by the execution of the database query on the master node (102).

3. The telecommunication method of claim 2, further comprising creating a log file (126) upon said determination that the second set of data elements (116) is not comprised in the first set of data elements (116), the log file (126) comprising information indicative of a third set of data elements (116), the third set of data elements (116) comprising the data elements (116) of the second set of data elements (116) which are not comprised in the first set of data elements (116).

4. The telecommunication method of claim 3, wherein the telecommunication system (100) further comprises a database management entity (108), wherein the database management entity (108) is adapted to:
- access the information comprised in the log file (126),
- create and store a replicate version of the third set of data elements (116) in the main memory (120) of the slave node (104).

5. The telecommunication method of any of the preceding claims, wherein the telecommunication system (100) further comprises a mobile telecommunication device (128) and a database server (134), wherein the mobile telecommunication device (128) and the database server (134) are connected via the telecommunication network (110), wherein the mobile telecommunication device (128) comprises the slave node (104), a first telecommunication interface (132) and a third central processing unit (130), wherein the database server (134) comprises the master node (102), the method comprising:
- receiving via the first telecommunication interface (132) the database query at the mobile telecommunication device (128),
- the determination whether the database query may be executed using replicate versions of data elements (116) by the third central processing unit (130),
- in case the database query may be executed using replicate versions of data elements (116), the execution of the database query on the slave node (104) in-memory using the second central data processing unit (118) and second main memory (120),
- in case the database query may not be executed using replicate versions of data elements (116), the execution of the database query by
• forwarding the database query to the database server (134) via the first telecommunication interface (132),
• in response to forwarding the database query to the database server (134) receiving a result of the database query from the database server (134) via the first telecommunication interface (132).

6. The method of any of the preceding claims, wherein the master node (102) further comprises access statistics for the data elements (116) stored in the main memory (114) of the master node (102), the access statistics comprising information for the data elements (116) indicative of a rate of change for the data elements (116), wherein the method further comprises:
- determining the rate of change of a data element (116),
- determining whether the rate of change of the data element (116) is below a predefined threshold,
- in case the rate of change of the data element (116) is below the predefined threshold, creating a replicate version of the data element (116) and storing the replicate version of the data element (116) in the main memory (120) of the slave node (104).

7. A telecommunication system (100) comprising a master node (102), at least one slave node (104) and application server (106), wherein the master node (102) comprises a first central processing unit (112) and a first main memory (114), the first main memory (114) comprising data elements (116), wherein the slave node (104) comprises a second central processing unit (118) and a second main memory (120), the second main memory (120) comprising a replicate version of a first set of the data elements (116), wherein the application server (106) comprises a plurality of engines (122) for processing database queries, wherein each engine (122) is adapted to process a predefined type of database query, wherein the application server (106) is operatively coupled via the telecommunication network (110) with the master node (102) and the at least one slave node (104), the application server (106) comprises a plurality of database views (124), wherein the database views (124) comprise annotations indicating the scenario type of a view, the telecommunication system (100) being adapted to:
- receive the database query via a telecommunication network (110), the database query requiring accessing a second set of the data elements (116),
- determine by a first engine of the plurality of engines a type of the database query by reading the annotations comprised in the database views (124) employed by the database query,
- in case the type of the database query can be executed by the slave node re-routing the database query to the slave node onto be executed on the slave node (104) in-memory using the second central data processing unit (118) and second main memory (120),
- otherwise process the database query by the first engine (122) by executing the database query on the master node (102) in-memory using the first central data processing unit (112) and first main memory (114).

8. A computer program product comprising machine executable instructions for performing the method of any of the claims 1-6.

## Patentansprüche

1. Telekommunikationsverfahren zum Bearbeiten einer Datenbankabfrage in einem Telekommunikationssystem (100), wobei das Telekommunikationssystem (100) einen Master-Knoten (102), mindestens einen Slave-Knoten (104) und einen Anwendungs-Server (106) umfasst, wobei der Master-Knoten (102) eine erste zentrale Verarbeitungseinheit (112) und einen ersten Hauptspeicher (114) umfasst, der erste Hauptspeicher (114) Datenelemente (116) umfasst, wobei der Slave-Knoten (104) eine zweite zentrale Verarbeitungseinheit (118) und einen zweiten Hauptspeicher (120) umfasst, der zweite Hauptspeicher (120) eine Replikatversion eines ersten Satzes der Datenelemente (116) umfasst, wobei der Anwendungs-Server (106) mehrere Funktionseinheiten (122) zur Verarbeitung von Datenbankabfragen umfasst, wobei jede Funktionseinheit (122) dafür ausgelegt ist, eine vordefinierte Art von Datenbankabfrage zu verarbeiten, wobei der Anwendungs-Server (106) über das Telekommunikationsnetz (110) funktionsmäßig mit dem Master-Knoten (102) und dem mindestens einen Slave-Knoten (104) verbunden ist, der Anwendungs-Server (106) mehrere Datenbankansichten (124) umfasst, wobei die Datenbankansichten (124) Annotationen umfassen, die den Typ eines Szenarios einer Ansicht angeben, wobei das Verfahren umfasst:
- Empfangen einer Datenbankabfrage am Telekommunikationssystem (100) über ein Telekommunikationsnetz (100), wobei die Datenbankabfrage einen Zugriff auf einen zweiten Satz der Datenelemente (116) erfordert,
- Bestimmen einer Art der Datenbankabfrage durch eine erste Funktionseinheit von den mehreren Funktionseinheiten durch Lesen der Annotationen, die in den in der Datenbankabfrage verwendeten Datenbankansichten (124) enthalten sind,
- falls die Art der Datenbankabfrage vom Slave-Knoten ausgeführt werden kann, Umleiten der Datenbankabfrage zum Slave-Knoten, um sie am Slave-Knoten (104) unter Verwendung der zweiten zentralen Verarbeitungseinheit (118) und des zweiten Hauptspeichers (120) in-Memory auszuführen,
- andernfalls Verarbeiten der Datenbankabfrage durch die erste Funktionseinheit (122) durch In-Memory-Ausführen der Datenbankabfrage am Master-Knoten (102) unter Verwendung der ersten zentralen Verarbeitungseinheit (112) und des ersten Hauptspeichers (114).

2. Telekommunikationsverfahren nach Anspruch 1, wobei die erste Funktionseinheit (122) für Folgendes ausgelegt ist:
- Bestimmen des zweiten Satzes von Datenelementen (116), auf den zugegriffen werden muss, um die Datenbankabfrage auszuführen,
- Bestimmen, ob der zweite Satz von Datenelementen (116) im ersten Satz von Datenelementen (116) enthalten ist,
- falls der zweite Satz von Datenelementen (116) im ersten Satz von Datenelementen (116) enthalten ist, Verarbeiten der Datenbankabfrage durch die Ausführung der Datenbankabfrage am Slave-Knoten (104),
- falls der zweite Satz von Datenelementen (116) nicht im ersten Satz von Datenelementen (116) enthalten ist, Verarbeiten der Datenbankabfrage durch die Ausführung der Datenbankabfrage am Master-Knoten (102).

3. Telekommunikationsverfahren nach Anspruch 2, ferner das Erzeugen einer Protokolldatei (126) umfassend, wenn bestimmt wird, dass der zweite Satz von Datenelementen (116) nicht im ersten Satz von Datenelementen (116) enthalten ist, wobei die Protokolldatei (126) Informationen umfasst, die auf einen dritten Satz von Datenelementen (116) hinweisen, wobei der dritte Satz von Datenelementen (116) die Datenelemente (116) des zweiten Satzes von Datenelementen (116), die nicht im ersten Satz von Datenelementen (116) enthalten sind, enthält.

4. Telekommunikationsverfahren nach Anspruch 3, wobei das Telekommunikationssystem (100) ferner eine Datenbankverwaltungsinstanz (108) umfasst, wobei die Datenbankverwaltungsinstanz (108) für Folgendes ausgelegt ist:
- Zugreifen auf die Informationen, die in der Protokolldatei (126) enthalten sind,
- Erzeugen und Speichern einer Replikatversion des dritten Satzes von Datenelementen (116) im Hauptspeicher (120) des Slave-Knotens (104).

5. Telekommunikationsverfahren nach einem der vorangehenden Ansprüche, wobei das Telekommunikationssystem (100) ferner eine mobile Telekommunikationsvorrichtung (128) und einen Datenbank-Server (134) umfasst, wobei die mobile Telekommunikationsvorrichtung (128) und der Datenbank-Server (134) über das Telekommunikationsnetz (110) miteinander verbunden sind, wobei die mobile Telekommunikationsvorrichtung (128) den Slave-Knoten (104), eine erste Telekommunikationsschnittstelle (132) und eine dritte zentrale Verarbeitungseinheit (130) umfasst, wobei der Datenbank-Server (134) den Master-Knoten (102) umfasst, wobei das Verfahren umfasst:
- Empfangen der Datenbankabfrage an der mobilen Telekommunikationsvorrichtung (128) über die erste Telekommunikationsschnittstelle (132),
- Bestimmen, ob die Datenbankabfrage unter Verwendung von Replikatversionen von Datenelementen (116) ausgeführt werden kann, durch die dritte zentrale Verarbeitungseinheit (130),
- falls die Datenbankabfrage unter Verwendung von Replikatversionen von Datenelementen (116) ausgeführt werden kann, In-Memory-Ausführen der Datenbankabfrage am Slave-Knoten (104) unter Verwendung der zweiten zentralen Verarbeitungseinheit (118) und des zweiten Hauptspeichers (120),
- falls die Datenbankabfrage nicht unter Verwendung von Replikatversionen von Datenelementen (116) ausgeführt werden kann, Ausführen der Datenbankabfrage durch
• Weitergeben der Datenbankabfrage an den Datenbank-Server (134) über die erste Telekommunikationsschnittstelle (132),
• Empfangen eines Ergebnisses der Datenbankabfrage vom Datenbank-Server (134) über die erste Telekommunikationsschnittstelle (132) als Antwort auf die Weitergabe der Datenbankabfrage an den Datenbank-Server (134).

6. Verfahren nach einem der vorstehenden Ansprüche, wobei der Master-Knoten (102) ferner eine Zugriffsstatistik für die im Hauptspeicher (114) des Master-Knotens (102) gespeicherten Datenelemente (116) umfasst, wobei die Zugriffsstatistik Informationen zu den Datenelementen (116) umfasst, die eine Änderungsrate der Datenelemente (116) angeben, wobei das Verfahren ferner umfasst.
- Bestimmen der Änderungsrate eines Datenelements (116),
- Bestimmen, ob die Änderungsrate des Datenelements (116) unterhalb eines vordefinierten Schwellenwerts liegt,
- falls die Änderungsrate des Datenelements (116) unterhalb des vordefinierten Schwellenwerts liegt, Erzeugen einer Replikatversion des Datenelements (116) und Speichern der Replikatversion des Datenelements (116) im Hauptspeicher (120) des Slave-Knotens (104).

7. Telekommunikationssystem (100), einen Master-Knoten (102), mindestens einen Slave-Knoten (104) und einen Anwendungs-Server (106) umfassend, wobei der Master-Knoten (102) eine erste zentrale Verarbeitungseinheit (112) und einen ersten Hauptspeicher (114) umfasst, der erste Hauptspeicher (114) Datenelemente (116) umfasst, wobei der Slave-Knoten (104) eine zweite zentrale Verarbeitungseinheit (118) und einen zweiten Hauptspeicher (120) umfasst, der zweite Hauptspeicher (120) eine Replikatversion eines ersten Satzes der Datenelemente (116) umfasst, wobei der Anwendungs-Server (106) mehrere Funktionseinheiten (122) zur Verarbeitung von Datenbankabfragen umfasst, wobei jede Funktionseinheit (122) dafür ausgelegt ist, eine vordefinierte Art von Datenbankabfrage zu verarbeiten, wobei der Anwendungs-Server (106) über das Telekommunikationsnetz (110) funktionsmäßig mit dem Master-Knoten (102) und dem mindestens einen Slave-Knoten (104) verbunden ist, der Anwendungs-Server (106) mehrere Datenbankansichten (124) umfasst, wobei die Datenbankansichten (124) Annotationen umfassen, die den Typ eines Szenarios einer Ansicht angeben, wobei das Telekommunikationssystem (100) für Folgendes ausgelegt ist:
- Empfangen einer Datenbankabfrage über ein Telekommunikationsnetz (110), wobei die Datenbankabfrage einen Zugriff auf einen zweiten Satz der Datenelemente (116) erfordert,
- Bestimmen einer Art der Datenbankabfrage durch eine erste Funktionseinheit von den mehreren Funktionseinheiten durch Lesen der Annotationen, die in den von der Datenbank verwendeten Datenbankansichten (124) enthalten sind,
- falls die Art der Datenbankabfrage vom Slave-Knoten ausgeführt werden kann, Umleiten der Datenbankabfrage zum Slave-Knoten, um sie am Slave-Knoten (104) unter Verwendung der zweiten zentralen Verarbeitungseinheit (118) und des zweiten Hauptspeichers (120) in-Memory auszuführen,
- andernfalls Verarbeiten der Datenbankabfrage durch die erste Funktionseinheit (122) durch In-Memory-Ausführen der Datenbankabfrage am Master-Knoten (102) unter Verwendung der ersten zentralen Verarbeitungseinheit (112) und des ersten Hauptspeichers (114).

8. Computerprogrammprodukt, das maschinenausführbare Befehle zur Durchführung des Verfahrens nach einem der Ansprüche 1-6 umfasst.

## Revendications

1. Procédé de télécommunication permettant de manipuler une requête d'une base de données dans un système de télécommunication (100), le système de télécommunication (100) comprenant un noeud maître (102), au moins un noeud esclave (104) et un serveur d'application (106), dans lequel le noeud maître (102) comprend une première unité centrale de traitement (112) et une première mémoire principale (114), la première mémoire principale (114) comprenant des éléments de données (116), dans lequel le noeud esclave (104) comprend une deuxième unité centrale de traitement (118) et une deuxième mémoire principale (120), la deuxième mémoire principale (120) comprenant une version répliquée d'un premier ensemble d'éléments de données (116), dans lequel le serveur d'application (106) comprend une pluralité de machines (122) pour traiter les requêtes de la base de données, dans lequel chaque machine (122) est appropriée pour traiter un type prédéfini de requête de la base de données, dans lequel le serveur d'application (106) est couplé de manière fonctionnelle par le biais du réseau de télécommunication (110) avec le noeud maître (102) et l'au moins un noeud esclave (104), le serveur d'application (106) comprend une pluralité de vues de la base de données (124), où les vues de la base de données (124) comprennent des commentaires indiquant le type de scénario d'une vue, le procédé comprenant :
- la réception de la requête de la base de données au niveau du système de télécommunication (100) par le biais d'un réseau de télécommunication (100), la requête de la base de données nécessitant l'accès à un deuxième ensemble d'éléments de données (116),
- la détermination, par une première machine de la pluralité des machines, du type de la requête de la base de données par la lecture des commentaires compris dans les vues de la base de données (124) utilisées par la requête de la base de données,
- dans le cas où le type de la requête de la base de données peut être exécuté par le noeud esclave, le réacheminement de la requête de la base de données vers le noeud esclave pour être exécutée sur le noeud esclave (104) en mémoire en utilisant la deuxième unité centrale de traitement des données (118) et la deuxième mémoire principale (120),
- dans le cas contraire, le traitement de la requête de la base de données par la première machine (122) par l'exécution de la requête de la base de données sur le noeud maître (102) en mémoire en utilisant la première unité centrale de traitement des données (112) et la première mémoire principale (114).

2. Procédé de télécommunication selon la revendication 1, dans lequel la première machine (122) est appropriée pour :
- déterminer le deuxième ensemble des éléments de données (116) auxquels il faut accéder afin d'exécuter la requête de la base de données,
- déterminer si le deuxième ensemble des éléments de données (116) est compris dans le premier ensemble des éléments de données (116),
- dans le cas où le deuxième ensemble des éléments de données (116) est compris dans le premier ensemble des éléments de données (116), traiter la requête de la base de données par l'exécution de la requête de la base de données sur le noeud esclave (104),
- dans le cas où le deuxième ensemble des éléments de données (116) n'est pas compris dans le premier ensemble des éléments de données (116), traiter la requête de la base de données par l'exécution de la requête de la base de données sur le noeud maître (102).

3. Procédé de télécommunication selon la revendication 2, comprenant en outre la création d'un fichier journal (126) lors de ladite détermination que le deuxième ensemble des éléments de données (116) n'est pas compris dans le premier ensemble des éléments de données (116), le fichier journal (126) comprenant l'information indicatrice d'un troisième ensemble d'éléments de données (116), le troisième ensemble d'éléments de données (116) comprenant les éléments de données (116) du deuxième ensemble des éléments de données (116) qui ne sont pas compris dans le premier ensemble des éléments de données (116).

4. Procédé de télécommunication selon la revendication 3, dans lequel le système de télécommunication (100) comprend en outre une entité de gestion de la base de données (108), dans lequel l'entité de gestion de la base de données (108) est appropriée pour :
- accéder à l'information comprise dans le fichier journal (126),
- créer et stocker une version répliquée du troisième ensemble des éléments de données (116) dans la mémoire principale (120) du noeud esclave (104).

5. Procédé de télécommunication selon l'une quelconque des revendications précédentes, dans lequel le système de télécommunication (100) comprend en outre un dispositif de télécommunication mobile (128) et un serveur de base de données (134), dans lequel le dispositif de télécommunication mobile (128) et le serveur de base de données (134) sont connectés par le biais du réseau de télécommunication (110), où le dispositif de télécommunication mobile (128) comprend le noeud esclave (104), une première interface de télécommunication (132) et une troisième unité centrale de traitement (130), où le serveur de la base de données (134) comprend le noeud maître (102), le procédé comprenant :
- la réception, par le biais de la première interface de télécommunication (132), de la requête de la base de données par le dispositif mobile de télécommunication (128),
- la détermination que la requête de la base de données peut être ou non exécutée en utilisant les versions répliquées des éléments de données (116) par la troisième unité centrale de traitement (130),
- dans le cas où la requête de la base de données peut être exécutée en utilisant les versions répliquées des éléments de données (116), l'exécution de la requête de la base de données sur le noeud esclave (104) en mémoire en utilisant la deuxième unité centrale de traitement des données (118) et la deuxième mémoire principale (120),
- dans le cas où la requête de la base de données ne peut pas être exécutée en utilisant les versions répliquées des éléments de données (116), l'exécution de la requête de la base de données par
• le transfert de la requête de la base de données vers le serveur de la base de données (134) par le biais de la première interface de télécommunication (132),
• en réponse au transfert de la requête de la base de données vers le serveur de la base de données (134), la réception d'un résultat de la requête de la base de données en provenance du serveur de la base de données (134) par le biais de la première interface de télécommunication (132).

6. Procédé selon l'une quelconque des revendications précédentes, dans lequel le noeud maître (102) comprend en outre les statistiques d'accès pour les éléments de données (116) stockées dans la mémoire principale (114) du noeud maître (102), les statistiques d'accès comprenant l'information sur les éléments de données (116) indicatrice d'un taux de modification pour les éléments de données (116), dans lequel le procédé comprend en outre :
- la détermination du taux de modification des éléments de données (116),
- la détermination que le taux de modification des éléments de données (116) est en dessous d'un seuil prédéfini,
- dans le cas où le taux de modification des éléments de données (116) est en dessous du seuil prédéfini, la création d'une version répliquée des éléments de données (116) et le stockage de la version répliquée des éléments de données (116) dans la mémoire principale (120) du noeud esclave (104).

7. Système de télécommunication (100) comprenant un noeud maître (102), au moins un noeud esclave (104) et un serveur d'application (106), dans lequel le noeud maître (102) comprend une première unité centrale de traitement (112) et une première mémoire principale (114), la première mémoire principale (114) comprenant les éléments de données (116), dans lequel le noeud esclave (104) comprend une deuxième unité centrale de traitement (118) et une deuxième mémoire principale (120), la deuxième mémoire principale (120) comprenant une version répliquée d'un premier ensemble des éléments de données (116), dans lequel le serveur d'application (106) comprend une pluralité de machines (122) pour traiter les requêtes de la base de données, dans lequel chaque machine (122) est appropriée pour traiter un type prédéfini de requête de la base de données, dans lequel le serveur d'application (106) est couplé de manière fonctionnelle par le biais du réseau de télécommunication (110) avec le noeud maître (102) et l'au moins un noeud esclave (104), le serveur d'application (106) comprend une pluralité de vues de la base de données (124), où les vues de la base de données (124) comprennent les commentaires indiquant le type de scénario d'une vue, le système de télécommunication (100) étant approprié pour :
- recevoir la requête de la base de données par le biais d'un réseau de télécommunication (110), la requête de la base de données nécessitant d'accéder à un deuxième ensemble des éléments de données (116),
- déterminer, par une première machine de la pluralité des machines, le type de la requête de la base de données par la lecture des commentaires compris dans les vues de la base de données (124) utilisées par la requête de la base de données,
- dans le cas où le type de la requête de la base de données peut être exécuté par le noeud esclave, réacheminer la requête de la base de données vers le noeud esclave pour être exécutée sur le noeud esclave (104) en mémoire en utilisant la deuxième unité centrale de traitement des données (118) et la deuxième mémoire principale (120),
- dans le cas contraire, traiter la requête de la base de données par la première machine (122) par l'exécution de la requête de la base de données sur le noeud maître (102) en mémoire en utilisant la première unité centrale de traitement des données (112) et la première mémoire principale (114).

8. Produit de programme informatique comprenant des instructions exécutables par machine pour exécuter le procédé selon l'une quelconque des revendications 1 à 6.
